# EUROPEAN PATENT SPECIFICATION

(11) **EP 1 272 366 B1**
(45) Date of publication and mention of the grant of the patent: **27.06.2007**
(21) Application number: 01920041.9
(22) Date of filing: 05.04.2001
(51) Int. Cl.: B60D 1/48, B62D 21/02

(54) **DRAW BEAM**
ZUTRÄGER
POUTRE DE TRACTION

(30) Priority: 11.04.2000 SE 0001319
(43) Date of publication of application: 08.01.2003
(73) Proprietor: VOLVO LASTVAGNAR AB, 405 08 Göteborg (SE)
(72) Inventor: NILSSON, Maria, S-417 64 Göteborg (SE)
(74) Representative: Andersson, Per Rune
(86) International application number: PCT/SE2001/000739
(87) International publication number: WO 2001/076896

(56) References cited:
- EP-A1- 0 696 535
- EP-A1- 0 950 551
- DE-A- 19 625 380
- DE-U1- 29 606 636
- DE-U1- 29 616 145

## Description

### TECHNICAL FIELD

The present invention relates to a draw beam arrangement for a vehicle having at least two longitudinally arranged frame beams and, at the rear end section of said frame beams, a connecting portion extending therebetween, comprising two connecting elements and a draw beam arranged between them, said connecting elements exhibiting a first set of through holes and a second set of through holes according to the preamble of the appended claim 1. Such a draw beam arrangement is previously known from the US Patent No 5,511,813.

### STATE OF THE ART

When manufacturing commercial vehicles, such as lorries, it is today common to offer various kinds of towing or draw arrangements, allowing a trailer to be connected to the vehicle.

Draw arrangements of the kind stated above generally comprises a draw beam fixedly attached to the vehicle and a draw arrangement supported by said draw beam, for example in the form of a ball type tow hook, or a towing pin arranged between two horizontal plates.

When hooking a trailer onto a tractor vehicle, it is advantageous from an aerodynamic aspect to minimise the distance between the tractor and the trailer. However, a certain minimum distance has to be maintained in order to avoid the trailer bumping into the tractor, e.g. when negotiating sharp corners.

Consequently, there is a requirement for enabling adaptation of the draw arrangement location, especially in the vehicle longitudinal direction, to the type of trailer that is to be connected to the vehicle. This is resolved by the above draw beam being manufactured in a multitude of different embodiments in order to enable the required adaptation.

However, the procedure discussed above is not cost-effective, as both manufacture and storage will be expensive due to the relatively small production series. Furthermore, changes of location are not allowed after delivery.

Another known solution for enabling adaptation of the location of the draw arrangement is to provide the frame beams of the vehicle with a large number of closely located through holes, whereby the end sections of the draw beam are connected to those holes corresponding most closely with the required location of the draw arrangement.

This is however rather costly, as more time is required at the production stage. Further, such a solution with closely located through holes could lead to lower strength of the frame beams, entailing the necessity of providing reinforcements.

From US Patent No 5,511,813 a draw beam arrangement is previously known, which is intended for use with a multitude of different vehicle models, and therefore exhibits a number of adjustment possibilities. The arrangement comprises two connecting elements functioning to connect, by means of screw connections, the longitudinal frame beams of a vehicle with a transversal draw beam. To allow adjustment of the width of the arrangement in dependence of the spacing of the frame beams, the connecting elements are provided with several through holes having elongated cross sections. The draw beam is further provided with a draw arrangement comprising a beam element formed with a horizontal beam portion welded to a vertical beam portion, onto which a ball type tow hook is affixed. The tow hook is adjustably arranged in the vertical direction on the vertical beam portion. Said horizontal beam portion is displaceably arranged, in the vehicle longitudinal direction, in a support fixedly attached to the draw beam. This arrangement enables adjustment of the location of the tow hook in the longitudinal direction of the vehicle.

Although the known arrangement allows satisfactory adaptation of the location of the draw arrangement, it has certain disadvantages. One disadvantage, caused by the draw beam arrangement being intended for use with a number of different vehicle models and thus exhibiting numerous adjustment possibilities, is that this entails that the known arrangement will have a relatively complex structure and thus will be relatively costly to manufacture. Another drawback is that the design tends to be relatively weak and thus not to be suitable for use with heavy-duty vehicles, such as lorries, where the load stress will be very high.

The patent document DE 29606636 U1 discloses a device for coupling a trailer to a towing vehicle. The coupling device comprises a component which is arranged transversely to the longitudinal direction of the vehicle, between two side parts. The side parts are connected to frame elements of the vehicle.

Furthermore, the document EP 0950551 teaches an arrangement comprising a cross-member device for connecting a trailer to a towing vehicle. In particular, the cross-member device comprises a cross-bar which is arranged between two connecting elements which are fixed to a frame of the vehicle in question.

### DISCLOSURE OF INVENTION

The object of the present invention is to provide a draw beam arrangement for vehicles, such as lorries, allowing good adaptability of the location of the draw arrangement, especially in the longitudinal direction of the vehicle, to the type of trailer that is to be connected to the vehicle, thereby enabling an optimum distance between the tractor vehicle and the trailer to be obtained.

This object is achieved by the invention described in claim 1. Preferred embodiments of the invention are described in the subsequent claims.

The draw beam arrangement according to the invention comprises two connecting elements and a draw beam arranged between them. Said connecting elements exhibit a first set of through holes intended- for connection with the longitudinal frame beams of the vehicle, and a second set of through holes intended for connection with said draw beam. Through said first set of through holes being offset in relation to said second set of through holes the effect will be obtained, if the connecting elements are rotated half a turn about an imaginary axis transversal to the vehicle lon-gitudinal direction, in connection with assembly, that the draw beam is displaced in the longitudinal direction of the vehicle whilst using the same holes in the frame beam. This allows an optimum distance between the tractor vehicle and the trailer to be achieved. A further advantage of the draw beam arrangement according to the invention is that it has a relatively simple structure and therefore will be simpler and less costly to manufacture.

According to a preferred embodiment, the first and second sets of through holes in the connecting elements are offset, in relation to each other, a distance corresponding to one fourth of the distance between two adjacent through holes provided in the frame beam. This entails that if the connecting elements are rotated half a turn, the draw beam will be displaced by a distance corresponding to half the distance between two adjacent through holes provided in the frame beam, thus obtaining twice the number of possible equivalent draw beam positions without the number of through holes in the frame beams having to be increased and/or located closer to each other.

According to a further preferred embodiment of the present invention, vertical beams are also provided between the vehicle frame beams and said draw beam, preferably between said connecting elements and the draw beam. In this manner vertical adjustment of the draw beam location is also enabled.

Further advantages and objects of the invention may be gathered from the appended claims and the accompanying description.

### DESCRIPTION OF DRAWINGS

The invention will be described below, in connection with preferred embodiment examples and the accompanying drawings, of which:
- Fig. 1: is a perspective view of a preferred embodiment of a draw beam arrangement according to the present invention;
- Fig. 2: is a perspective view of the draw beam arrangement of Fig. 1 in a disassembled state; and
- Fig. 3: is a perspective view of a further preferred embodiment of the draw beam arrangement according to the present invention.

### PREFERRED EMBODIMENT

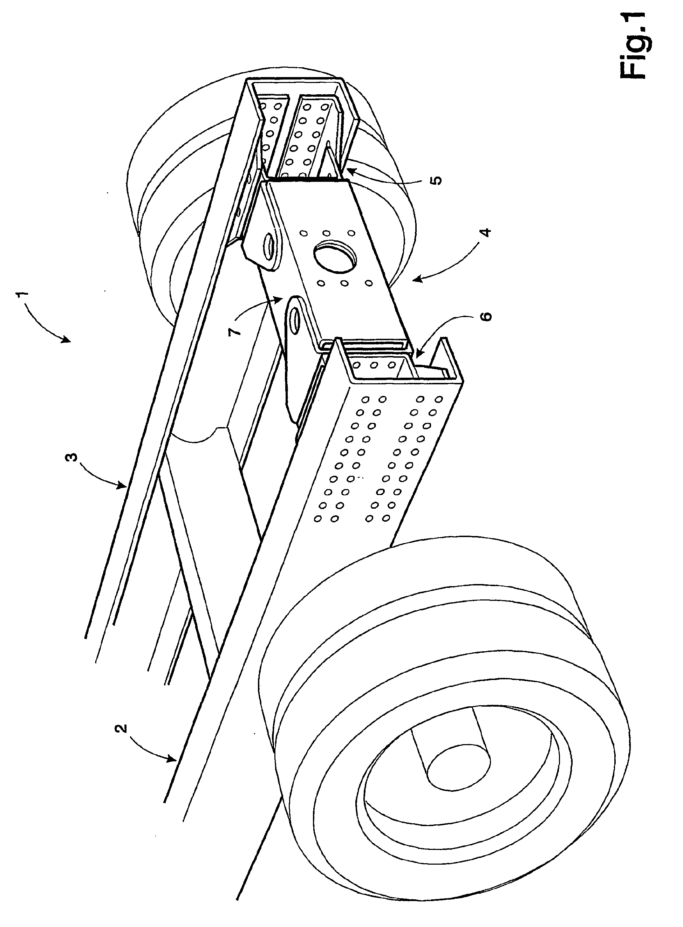

Fig. 1 illustrates a perspective view of a draw beam arrangement 1 according to the present invention, arranged on a vehicle having two frame beams 2, 3 provided in the longitudinal direction of the vehicle. At the rear end section of the frame beams 2, 3, and between them, extends a connecting portion 4, including two connecting elements 5, 6 and a draw beam 7 arranged therebetween. The connecting elements 5, 6 are connected on the one hand with the frame beams 2, 3, and on the other with the draw beam 7, by means of screw or rivet connections. One advantage of using screw connections is that they are relatively simple to disassemble.

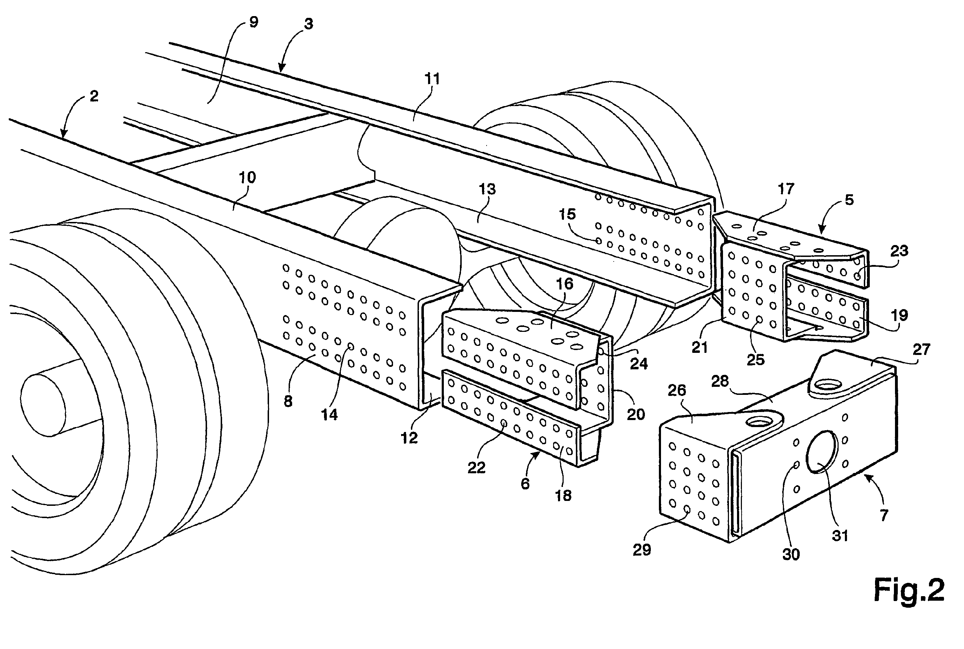

With reference now to Fig. 2, the components comprised in the draw beam arrangement 1 will be described in further detail. In the illustrated example the frame beams 2, 3 are shaped like U-beams with a vertical middle section 8, 9 and upper 10, 11 and lower 12, 13 flanges, together providing the rigidity of the frame beams 2, 3. By providing the frame beams 2, 3 with an extra number of through holes 14, 15, in excess of what is required for attachment of the draw beam 7, a relatively good adaptation is achieved of the location of the draw beam 7 in relation to the type of trailer to be connected to the vehicle. Furthermore, a modification of the location of the draw beam 7 is possible subsequent to vehicle delivery, without having to make further through holes 14, 15.

The connecting elements 5, 6 are formed with an upper 16, 17 and a lower 18, 19 angled plate that are joined, preferably riveted, with an intermediate U-beam 20, 21. The angled plates 16, 17, 18, 19 of the connecting elements 5,6 are provided, on the side facing the frame beams 2, 3, with a first set of through holes 22, 23, and the U-beams thereof are provided, on the side facing the draw beam 7, with a second set of through holes 24, 25. Said first set of through holes 22, 23 is hereby offset, in relation to said second set of through holes 24, 25, by a distance corresponding to one fourth of the distance between two adjacent holes in the respective frame beam 2, 3. This entails that if the connecting elements 5, 6 are rotated, in connection with assembly, half a turn about an imaginary axis transversal to the vehicle longitudinal direction, the draw beam 7 will be displaced a distance corresponding to half the distance between two adjacent through holes 14, 15 provided in the frame beam 2, 3, whilst using the same holes 14, 15 in the frame beam. Consequently, twice the number of possible equivalent draw beam positions is achieved, without the number of through holes 14, 15 in the frame beams 2, 3 having to be increased and/or located closer to each other, which could have lead to a reduction of the strength of the frame beams. Through the relatively simple shape of the connecting elements 5, 6, with plates angled in one plane only, the use of relatively strong/thick plates is facilitated, which contributes to giving the design the required rigidity, especially for heavy duty vehicle applications, such as lorries, where the load stress will be high.

The draw beam 7 is formed with lateral elements 26, 27 and with a U-beam 28 arranged therebetween, the latter being welded to said lateral elements 26, 27. The lateral elements 26, 27 are provided with a set of through holes 29, the number and configuration of which coincide with the second set of through holes 24, 25 of the connecting elements 5, 6. The draw beam 7 also exhibits further through holes 30 and an aperture 31, serving as the attachment point for a draw arrangement, for example a ball type tow hook. Thanks to the relatively simple form of the draw beam, using plates bent in one plane only, like those of the connecting elements 5, 6, the use of relatively strong/thick plates is facilitated, which contributes to giving the design its rigidity.

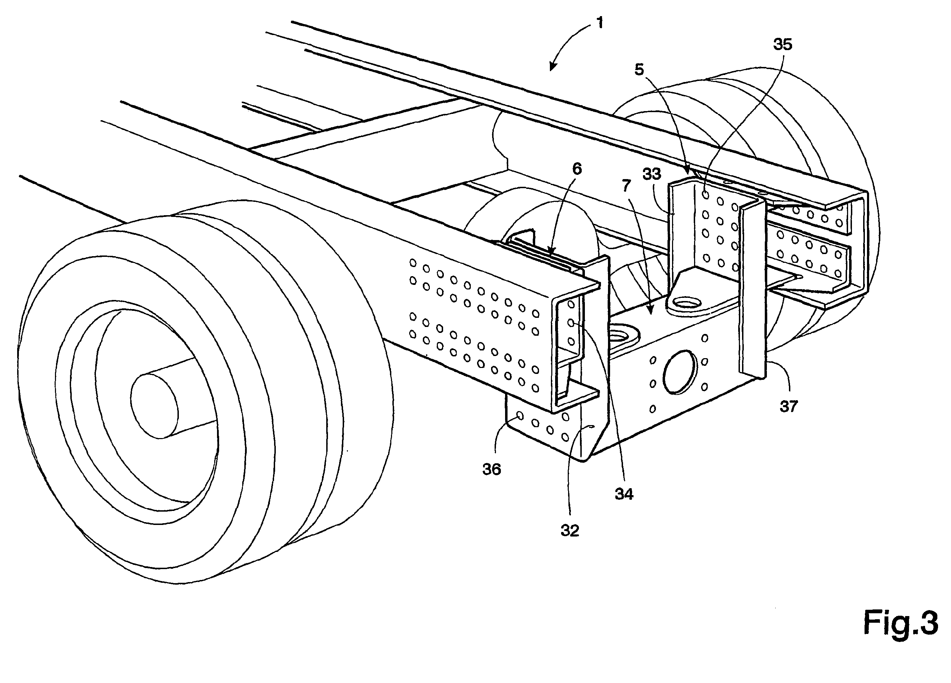

Fig. 3 shows a perspective view of an alternative preferred embodiment of the draw beam arrangement 1 according to the present invention. Between the connecting elements 5, 6 and the draw beam 7, two vertical U-beams 32, 33 are provided, which displace the vertical location of the draw beam 7. Said vertical U-beams are each provided with two sets of through holes, an upper set 34, 35 and a lower set 36, 37, the numbers and configurations of which coincide with the second set of through holes 24, 25 in the connecting elements 5, 6 and the through holes 29 provided in the lateral elements 26, 27 of the draw beam 7, respectively.

The invention will not be limited to the embodiment examples described above and illustrated in the drawings, but other embodiments are also conceivable. For example, the distance by which said first set of through holes is offset in relation to said second set of through holes could be greater or smaller than one fourth of the distance between two adjacent holes in the respective frame beam. Finally, the connecting elements may be shaped so as to allow rotation only a quarter turn, whereby the draw beam will be displaced also in the vertical direction, together with a shorter distance in the longitudinal direction of the vehicle, compared to the corresponding rotation with half a turn. Thus, adaptation of the vehicle draw arrangement to the height of the trailer is also allowed.

## Claims

1. A draw beam arrangement for a vehicle having at least two frame beams (2, 3) arranged in the longitudinal direction of the vehicle and, at the rear end section of said frame beams (2, 3), a connecting portion (4) extending therebetween, comprising two connecting elements (5,6) and a draw beam (7) arranged between them, said connecting elements (5,6) exhibiting a first set of through holes (22,23) for connection with the longitudinal frame beams of the vehicle and a second set of through holes (24,25) for connection with said draw beam, **characterised in that** said first set of through holes (22,23) is offset in relation to said second set of through holes (24,25), wherein said first set of through holes (22,23) is offset, when the connecting elements (5,6) are arranged at the rear end section of the frame beams (2,3), in the longitudinal direction of the vehicle in relation to said second set of through holes (24,25) so as to obtain a displacement of the draw beam in the longitudinal direction of the vehicle when the connecting elements are rotated half a turn about an imaginary axis transversal to the vehicle longitudinal direction, while using the same holes in the frame beams.

2. The draw beam arrangement for a vehicle according to claim 1, **characterised in that** said first set of through holes (22, 23) is offset, in relation to said second set of through holes (24, 25), by a distance corresponding to one fifth up to one third of the distance between two adjacent through holes (14, 15) provided in the frame beam (2, 3).

3. The draw beam arrangement for a vehicle according to claim 2, **characterised in that** said first set of through holes (22, 23) is offset, in relation to said second set of through holes (24, 25), by a distance corresponding to about one fourth of the distance between two adjacent through holes(14, 15) provided in the frame beam (2, 3).

4. A draw beam arrangement for a vehicle according to any one of the preceding claims, **characterised in that** said first set of through holes (22, 23) is intended to co-operate, when the connecting elements (5, 6) are arranged at the rear end section of the frame beams (2, 3), with the through holes (14, 15) provided in said frame beams (2, 3).

5. A draw beam arrangement for a vehicle according to any one of the preceding claims, **characterised in that** two generally vertical beams (32, 33) are arranged between the frame beams (2, 3) and the draw beam (7).

6. The draw beam arrangement for a vehicle according to claim 5, **characterised in that** said vertical beams (32, 33) are arranged between the connecting elements (5, 6) and the draw beam (7).

## Patentansprüche

1. Zugträgeranordnung für ein Fahrzeug mit mindestens zwei in Längsrichtung des Fahrzeugs angeordneten Rahmenträgern (2, 3) und einem am hinteren Endabschnitt der Rahmenträger (2, 3) angeordneten und sich dazwischen erstreckenden Verbindungsabschnitt (4), mit:
zwei Verbindungselementen (5, 6) und einem dazwischen angeordneten Zugträger (7), wobei die Verbindungselemente (5, 6) einen ersten Satz von Durchgangslöchern (22, 23) für eine Verbindung mit den sich in Längsrichtung erstreckenden Rahmenträgern des Fahrzeugs und einen zweiten Satz von Durchgangslöchern (24, 25) für eine Verbindung mit dem Zugträger aufweisen;
**dadurch gekennzeichnet, dass**
der erste Satz von Durchgangslöchern (22, 23) bezüglich des zweiten Satzes von Durchgangslöchern (24, 25) versetzt ist, wobei der erste Satz von Durchgangslöchern (22, 23), wenn die Verbindungselemente (5, 6) am hinteren Endabschnitt der Rahmenträger (2, 3) angeordnet sind, in der Längsrichtung des Fahrzeugs bezüglich des zweiten Satzes von Durchgangslöchern (24, 25) versetzt ist, um einen Versatz des Zugträgers in der Längsrichtung des Fahrzeugs zu erhalten, wenn die Verbindungselemente um eine halbe Umdrehung um eine sich quer zur Fahrzeuglängsrichtung erstreckende gedachte Achse gedreht werden, während die gleichen Löcher in den Rahmenträgern verwendet werden.

2. Zugträgeranordnung nach Anspruch 1, **dadurch gekennzeichnet, dass** der erste Satz von Durchgangslöchern (22, 23) bezüglich des zweiten Satzes von Durchgangslöchern (24, 25) um einen Abstand versetzt ist, der einem Fünftel bis einem Drittel des Abstandes zwischen zwei im Rahmenträger (2, 3) ausgebildeten benachbarten Durchgangslöchern (14, 15) entspricht.

3. Zugträgeranordnung nach Anspruch 2, **dadurch gekennzeichnet, dass** der erste Satz von Durchgangslöchern (22, 23) bezüglich des zweiten Satzes von Durchgangslöchern (24, 25) um einen Abstand beabstandet ist, der etwa einem Viertel des Abstandes zwischen zwei im Rahmenträger (2, 3) ausgebildeten benachbarten Durchgangslöchern (14, 15) entspricht.

4. Zugträgeranordnung nach einem der vorangehenden Ansprüche, **dadurch gekennzeichnet, dass** der erste Satz von Durchgangslöchern (22, 23) dazu vorgesehen ist, mit den in den Rahmenträgern (2, 3) ausgebildeten Durchgangslöchern (14, 15) zusammenzuwirken, wenn die Verbindungselemente (5, 6) am hinteren Endabschnitt der Rahmenträger (2, 3) angeordnet sind.

5. Zugträgeranordnung nach einem der vorangehenden Ansprüche, **dadurch gekennzeichnet, dass** zwei im Wesentlichen vertikale Träger (32, 33) zwischen den Rahmenträgern (2, 3) und dem Zugträger (7) angeordnet sind.

6. Zugträgeranordnung nach Anspruch 5, **dadurch gekennzeichnet, dass** die vertikalen Träger (32, 33) zwischen den Verbindungselementen (5, 6) und dem Zugträger (7) angeordnet sind.

## Revendications

1. Agencement à poutre de traction pour un véhicule ayant au moins deux poutres de châssis (2, 3) agencées dans la direction longitudinale du véhicule et, au niveau du tronçon d'extrémité arrière desdites poutres de châssis (2, 3), une partie de connexion (4) s'étendant entre celles-ci, comportant deux éléments de connexion (5, 6) et une poutre de traction (7) agencés entre ceux-ci, lesdits éléments de connexion (5, 6) présentant un premier ensemble de trous traversants (22, 23) pour connexion aux poutres de châssis longitudinales du véhicule, et un second ensemble de trous traversants (24, 25) pour connexion à ladite poutre de traction, **caractérisé en ce que** ledit premier ensemble de trous traversants (22, 23) est décalé par rapport audit second ensemble de trous traversants (24, 25), dans lequel ledit premier ensemble de trous traversants (22, 23) est décalé, lorsque les éléments de connexion (5, 6) sont agencés au niveau du tronçon d'extrémité arrière des poutres de châssis (2, 3), dans la direction longitudinale du véhicule par rapport audit second ensemble de trous traversants (24, 25), de manière à obtenir un déplacement de la poutre de traction dans la direction longitudinale du véhicule lorsque les éléments de connexion sont tournés d'un demi-tour autour d'un axe imaginaire transversal à la direction longitudinale du véhicule, tout en utilisant les mêmes trous dans les poutres de châssis.

2. Agencement à poutre de traction pour un véhicule selon la revendication 1, **caractérisé en ce que** ledit premier ensemble de trous traversants (22, 23) est décalé, par rapport audit second ensemble de trous traversants (24, 25), d'une distance correspondant à un cinquième jusqu'à un tiers de la distance entre deux trous traversants adjacents (14, 15) agencés dans la poutre de châssis (2, 3).

3. Agencement à poutre de traction pour un véhicule selon la revendication 2, **caractérisé en ce que** ledit premier ensemble de trous traversants (22, 23) est décalé, par rapport audit second ensemble de trous traversants (24, 25), d'une distance correspondant à environ un quart de la distance entre deux trous traversants adjacents (14, 15) agencés dans la poutre de châssis (2, 3).

4. Agencement à poutre de traction pour un véhicule selon l'une quelconque des revendications précédentes, **caractérisé en ce que** ledit premier ensemble de trous traversants (22, 23) est prévu pour coopérer, lorsque les éléments de connexion (5, 6) sont agencés au niveau du tronçon d'extrémité arrière des poutres de châssis (2, 3), avec les trous traversants (14, 15) agencés dans lesdites poutres de châssis (2, 3).

5. Agencement à poutre de traction pour un véhicule selon l'une quelconque des revendications précédentes, **caractérisé en ce que** deux poutres généralement verticales (32, 33) sont agencées entre les poutres de châssis (2, 3) et la poutre de traction (7).

6. Agencement à poutre de traction pour un véhicule selon la revendication 5, **caractérisé en ce que** lesdites poutres verticales (32, 33) sont agencées entre les éléments de connexion (5, 6) et la poutre de traction (7).
